# FASCICULE DE BREVET EUROPEEN

(11) **EP 3 914 746 B1**
(45) Date de publication et mention de la délivrance du brevet: **08.03.2023**
(21) Numéro de dépôt: 20706787.7
(22) Date de dépôt: 24.01.2020
(51) Int. Cl.: C22C 21/00, B23K 26/342, B22F 3/105, B33Y 70/00, B33Y 80/00, C22F 1/04

(54) **PROCÉDÉ DE FABRICATION D'UNE PIÈCE EN ALLIAGE D'ALUMINIUM**
VERFAHREN ZUR HERSTELLUNG EINES ALUMINIUMLEGIERUNGSTEILS
METHOD FOR MANUFACTURING AN ALUMINUM ALLOY PART

(30) Priorité: 24.01.2019 FR 1900598; 30.07.2019 FR 1908684
(43) Date de publication de la demande: 01.12.2021
(73) Titulaire: C-TEC CONSTELLIUM TECHNOLOGY CENTER, 38341 Voreppe (FR)
(72) Inventeur: CHEHAB, Bechir, 38500 VOIRON (FR)
(74) Mandataire: Constellium - Propriété Industrielle
(86) Numéro de dépôt international: PCT/FR2020/050108
(87) Numéro de publication internationale: WO 2020/095009

(56) Documents cités:
- NIU X P ET AL: "Hydride formation in mechanically alloyed Al@?Zr and Al@?Fe@?Zr", SCRIPTA METALLURGICA ET MATERIALIA, PERGAMON PRESS, GB, vol. 30, no. 1, 1 janvier 1994 (1994-01-01), pages 13-18, XP024180610, ISSN: 0956-716X, DOI: 10.1016/0956-716X(94)90350-6 [extrait le 1994-01-01]
- LIU FENGGUO ET AL: "Preparation of Aluminum-Zirconium Master Alloy by Aluminothermic Reduction in Cryolite Melt", JOM: JOURNAL OF METALS, SPRINGER NEW YORK LLC, UNITED STATES, vol. 69, no. 12, 28 août 2017 (2017-08-28) , pages 2644-2647, XP036371277, ISSN: 1047-4838, DOI: 10.1007/S11837-017-2548-7 [extrait le 2017-08-28]
- HU Z ET AL: "Phase equilibria in the AlZrCe system at 773K", JOURNAL OF ALLOYS AND COMPOUNDS, ELSEVIER SEQUOIA, LAUSANNE, CH, vol. 491, no. 1-2, 18 février 2010 (2010-02-18), pages 200-202, XP026866736, ISSN: 0925-8388 [extrait le 2009-11-10]
- TSAKIROPOULOS P ET AL: "Development of Al@?Cr@?X and Al@?Cr@?Zr@?X alloys by rapid solidification from the melt", MATERIALS SCIENCE ENGINEERING, ELSEVIER SEQUOIA, LAUSANNE, CH, vol. 98, 1 février 1988 (1988-02-01), pages 143-147, XP025878519, ISSN: 0025-5416, DOI: 10.1016/0025-5416(88)90143-7 [extrait le 1988-02-01]
- GUO C ET AL: "Thermodynamic description of the Al-Fe-Zr system", CALPHAD. COMPUTER COUPLING OF PHASE DIAGRAMS AND THERMOCHEMISTRY, NEW YORK, NY, US, vol. 32, no. 4, 1 décembre 2008 (2008-12-01), pages 637-649, XP025646203, ISSN: 0364-5916, DOI: 10.1016/J.CALPHAD.2008.08.007 [extrait le 2008-09-09]

## Description

### DOMAINE TECHNIQUE

Le domaine technique de l'invention est un procédé de fabrication d'une pièce en alliage d'aluminium, mettant en oeuvre une technique de fabrication additive.

### ART ANTERIEUR

Depuis les années 80, les techniques de fabrication additive se sont développées. Elles consistent à mettre en forme une pièce par ajout de matière, ce qui est à l'opposé des techniques d'usinage, qui visent à enlever de la matière. Autrefois cantonnée au prototypage, la fabrication additive est à présent opérationnelle pour fabriquer des produits industriels en série, γ compris des pièces métalliques.

Le terme « fabrication additive » est défini selon la norme française XP E67-001 comme un "ensemble des procédés permettant de fabriquer, couche par couche, par ajout de matière, un objet physique à partir d'un objet numérique". La norme ASTM F2792 (janvier 2012) définit également la fabrication additive. Différentes modalités de fabrication additive sont aussi définies et décrites dans la norme ISO/ASTM 17296-1. Le recours à une fabrication additive pour réaliser une pièce en aluminium, avec une faible porosité, a été décrit dans le document WO2015006447. L'application de couches successives est généralement réalisée par application d'un matériau dit d'apport, puis fusion ou frittage du matériau d'apport à l'aide d'une source d'énergie de type faisceau laser, faisceau électronique, torche plasma ou arc électrique. Quelle que soit la modalité de fabrication additive appliquée, l'épaisseur de chaque couche ajoutée est de l'ordre de quelques dizaines ou centaines de microns.

D'autres méthodes de fabrication additive sont utilisables. Citons par exemple, et de façon non limitative, la fusion ou le frittage d'un matériau d'apport prenant la forme d'une poudre. Il peut s'agir de fusion ou de frittage laser. La demande de brevet US20170016096 décrit un procédé de fabrication d'une pièce par fusion localisée obtenue par l'exposition d'une poudre à un faisceau d'énergie de type faisceau d'électrons ou faisceau laser, le procédé étant également désigné par les acronymes anglosaxons SLM, signifiant "Selective Laser Melting" ou "EBM", signifiant "Electron Beam Melting".

Les propriétés mécaniques des pièces d'aluminium obtenues par fabrication additive dépendent de l'alliage formant le métal d'apport, et plus précisément de sa composition ainsi que des traitements thermiques appliqués suite à la mise en oeuvre de la fabrication additive. La demanderesse a déterminé une composition d'alliage qui, utilisée dans un procédé de fabrication additive, permet d'obtenir des pièces aux performances mécaniques remarquables, sans qu'il soit nécessaire de mettre en oeuvre des traitements thermiques de type mise en solution et trempe. De plus, les pièces utilisées présentent des propriétés intéressantes de conductivité thermique ou de conductivité électrique. Cela permet de diversifier les possibilités d'applications de ces pièces.

### EXPOSE DE L'INVENTION

Un premier objet de l'invention est un procédé de fabrication d'une pièce comportant une formation de couches métalliques successives, superposées les unes aux autres, chaque couche étant formée par le dépôt d'un métal d'apport, le métal d'apport étant soumis à un apport d'énergie de façon à entrer en fusion et à constituer, en se solidifiant, ladite couche, le procédé étant caractérisé en ce que le métal d'apport est un alliage d'aluminium comportant les éléments d'alliage suivant (% en poids) :
- Zr : 0,5 % à 2,5 %, de préférence selon une première variante 0,8 à 2,5 %, plus préférentiellement 1 à 2,5 %, encore plus préférentiellement 1,3 à 2,5 %. ; ou de préférence selon une deuxième variante 0,5 à 2 %, plus préférentiellement 0,6 à 1,8 %, plus préférentiellement 0,6 à 1,6 %, plus préférentiellement 0,7 à 1,5 %, plus préférentiellement 0,8 à 1,5 % plus préférentiellement 0,9 à 1,5 %, encore plus préférentiellement 1 à 1,4 % ;
- Fe : 0 % à 3 %, de préférence 0,5 % à 2,5 % ; préférentiellement selon une première variante 0,8 à 2,5 %, préférentiellement 0,8 à 2 %, plus préférentiellement 0,8 à 1,2 ; ou préférentiellement selon une deuxième variante 1,5 à 2,5 %, préférentiellement 1,6 à 2,4 %, plus préférentiellement 1,7 à 2,3 % ;
- éventuellement Si : ≤ 0,3 %, de préférence ≤ 0,2 %, plus préférentiellement ≤ 0,1 % ;
- éventuellement Cu : ≤ 0,5 %, de préférence 0,05 à 0,5 %, préférentiellement 0,1 à 0,4 % ;
- éventuellement Mg : ≤ 0,2 %, de préférence ≤ 0,1 % de préférence < 0,05 % ;
- autres éléments d'alliage < 0,1 % individuellement, et au total < 0,5 % ;
- impuretés : < 0,05 % individuellement, et au total < 0,15 % ;
reste aluminium.

Parmi les autres éléments d'alliage, citons par exemple Cr, V, Ti, Mn, Mo, W, Nb, Ta, Sc, Ni, Zn, Hf, Nd, Ce, Co, La, Ag, Li, Y, Yb, Er, Sn, In, Sb, Sr, Ba, Bi, Ca, P, B et/ou du mischmétal.

De préférence, le procédé peut comporter les caractéristiques suivantes, prises isolément ou selon les combinaisons techniquement réalisables :
- Zr : 0,8 à 2,5 %, ou de préférence 1 % à 2,5 %, ou encore de préférence 1,2 % à 2,5 %, ou encore de préférence 1,3 % à 2,5 % ou encore de préférence 1,5 % à 2,5 % ;
- Zr : 0,5 à 2 %, plus préférentiellement 0,6 à 1,8 %, plus préférentiellement 0,6 à 1,6 %, plus préférentiellement 0,7 à 1,5 %, plus préférentiellement 0,8 à 1,5 % plus préférentiellement 0,9 à 1,5 %, encore plus préférentiellement 1 à 1,4 % ;
- Fe : 0,5 % à 2,5 % ou 0,5 % à 2% ; préférentiellement 0,8 à 2,5%, préférentiellement 0,8 à 2%, plus préférentiellement 0,8 à 1,2 ;
- Fe : 0,5% à 2,5% ou 0,5% à 2% ; préférentiellement 1,5 à 2,5%, préférentiellement 1,6 à 2,4%, plus préférentiellement 1,7 à 2,3% ;
- Si : < 0,2 % et de préférence < 0,1% ;
- Si ≥ 0,01%, voire ≥ 0,05% ;
- Cu : 0,05% à 0,5%, préférentiellement 0,1 à 0,4 % ;
- Zr : 0,5% à 2,5% et Fe > 1% ;
- Zr : 0,5 % à 2,5 % et Fe < 1% ;
- la fraction massique de chaque autre élément d'alliage est strictement inférieure à 500 ppm, à 300 pm, à 200 ppm, voire à 100 ppm ;
- la fraction massique de chaque impureté est strictement inférieure à 300 pm, à 200 ppm, voire à 100 ppm ;
- l'alliage ne comporte pas de Cr, V, Mn, Ti, Mo, ou selon une fraction massique inférieure à 500 ppm, à 300 ppm, à 200 ppm voire inférieure à 100 ppm.

Selon une variante, l'alliage utilisé selon la présente invention comprend du Cu, selon une fraction massique de 0,05 % à 0,5%, préférentiellement de 0,1 à 0,4%.

Chaque couche peut notamment décrire un motif défini à partir d'un modèle numérique.

Le procédé peut comporter, suite à la formation des couches, c'est-à-dire suite à la formation de la pièce finale, une application d'au moins un traitement thermique. Le traitement thermique peut être ou comporter un revenu ou un recuit. Il peut également comporter une mise en solution et une trempe, même si on préfère les éviter. Il peut également comporter une compression isostatique à chaud.

Afin de privilégier les propriétés mécaniques, le traitement thermique peut être effectué :
- à une température supérieure 400°C, auquel cas la durée du traitement thermique est comprise de 0,1 h à 10 h ;
- ou à une température comprise de 300°C à 400°C, auquel cas la durée du traitement thermique est comprise de 0,5 h à 100 h.

Afin de privilégier les propriétés de conduction thermique ou électrique, le traitement thermique peut être effectué à une température supérieure ou égale à 350°C ou à 400°C, ou une durée de 90 à 200 h, de façon à obtenir une conductivité thermique ou électrique optimale. Par exemple une température de 380 à 470°C et une durée de 90 à 110 h.

Selon un mode de réalisation avantageux, le procédé ne comporte pas de trempe suite à la formation des couches, c'est-à-dire suite à la formation de la pièce finale, ou suite au traitement thermique. Ainsi, de préférence, le procédé ne comporte pas d'étapes de mise en solution suivie d'une trempe.

Selon un mode de réalisation, le métal d'apport prend la forme d'une poudre, dont l'exposition à un faisceau de lumière ou de particules chargées résulte en une fusion localisée suivie d'une solidification, de façon à former une couche solide. Selon un autre mode de réalisation, le métal d'apport est issu d'un fil d'apport, dont l'exposition à un arc électrique résulte en une fusion localisée suivie d'une solidification, de façon à former une couche solide.

Un deuxième objet de l'invention est une pièce métallique, obtenue après application d'un procédé selon le premier objet de l'invention.

Un troisième objet de l'invention est un matériau d'apport, notamment un fil d'apport ou d'une poudre, destiné à être utilisé en tant que matériau d'apport d'un procédé de fabrication additive, caractérisé en ce qu'il est constitué d'un alliage d'aluminium, comportant les éléments d'alliage suivants (% en poids) :
- Zr : 0,5 % à 2,5%, de préférence selon une première variante 0,8 à 2,5%, plus préférentiellement 1 à 2,5%, encore plus préférentiellement 1,3 à 2,5%. ; ou de préférence selon une deuxième variante 0,5 à 2%, plus préférentiellement 0,6 à 1,8%, plus préférentiellement 0,6 à 1,6%, plus préférentiellement 0,7 à 1,5%, plus préférentiellement 0,8 à 1,5 % plus préférentiellement 0,9 à 1,5%, encore plus préférentiellement 1 à 1,4 % ;
- Fe : 0 % à 3%, de préférence 0,5 % à 2,5 % ; préférentiellement selon une première variante 0,8 à 2,5%, préférentiellement 0,8 à 2%, plus préférentiellement 0,8 à 1,2 ; ou préférentiellement selon une deuxième variante 1,5 à 2,5%, préférentiellement 1,6 à 2,4%, plus préférentiellement 1,7 à 2,3 % ;
- éventuellement Si : ≤ 0,3%, de préférence ≤ 0,2%, plus préférentiellement ≤ 0,1% ;
- éventuellement Cu : ≤ 0,5%, de préférence 0,05 à 0,5%, préférentiellement 0,1 à 0,4 % ;
- éventuellement Mg : ≤ 0,2%, de préférence ≤ 0,1% de préférence < 0,05 % ;
- autres éléments d'alliage < 0,1% individuellement, et au total < 0,5 % ;
- impuretés : < 0,05 % individuellement, et au total < 0,15 % ;
reste aluminium.

L'alliage d'aluminium formant le matériau d'apport peut présenter les caractéristiques décrites en lien avec le premier objet de l'invention.

Le matériau d'apport peut se présenter sous la forme d'une poudre. La poudre peut être telle qu'au moins 80 % des particules composant la poudre ont une taille moyenne dans la plage suivante : 5 µm à 100 µm, de préférence de 5 à 25 µm, ou de 20 à 60 µm.

Lorsque le matériau d'apport se présente sous la forme d'un fil, le diamètre du fil peut notamment être compris de 0,5 mm à 3 mm, et de préférence compris de 0,5 mm à 2 mm, et encore de préférence compris de 1 mm à 2 mm.

Un autre objet de l'invention est l'utilisation d'une poudre ou d'un fil d'apport tels que décrits ci-avant et dans le reste de la description dans un procédé de fabrication choisi parmi : la pulvérisation à froid (CSC), le dépôt par fusion laser (LMD), la fabrication additive par friction (AFS), le frittage par étincelle au plasma (FAST) ou le soudage par friction rotative (IRFW), de préférence la pulvérisation à froid (CSC).

D'autres avantages et caractéristiques ressortiront plus clairement de la description qui va suivre de modes particuliers de réalisation de l'invention, donnés à titre d'exemples non limitatifs, et représentés sur les figures listées ci-dessous.

### FIGURES

[Fig. 1] La Figure 1 est un schéma illustrant un procédé de fabrication additive de type SLM.
[Fig. 2] La Figure 2 illustre des propriétés de traction et de conduction électrique déterminées au cours des essais expérimentaux de l'exemple 1, à partir d'échantillons fabriqués en mettant en oeuvre un procédé de fabrication additive selon l'invention.
[Fig. 3] La Figure 3 est un schéma illustrant un procédé de fabrication additive de type WAAM.
[Fig. 4] La Figure 4 est un schéma de l'éprouvette utilisée selon les exemples.
[Fig. 5] La Figure 5 est un schéma des deuxièmes pièces de test de l'exemple 1.
[Fig. 6] La Figure 6 illustre des propriétés de traction et de conduction électrique déterminées au cours des essais expérimentaux de l'exemple 2, à partir d'échantillons fabriqués en mettant en oeuvre un procédé de fabrication additive selon l'invention.

### EXPOSE DE MODES DE REALISATION PARTICULIERS

Dans la description, sauf indication contraire :
- la désignation des alliages d'aluminium est conforme à la nomenclature de The Aluminum Association ;
- les teneurs en éléments chimiques sont désignées en % et représentent des fractions massiques. La notation x % - y % signifie supérieur ou égal à x % et inférieur ou égal à y %.

Par impureté, on entend des éléments chimiques présents dans l'alliage de façon non intentionnelle.

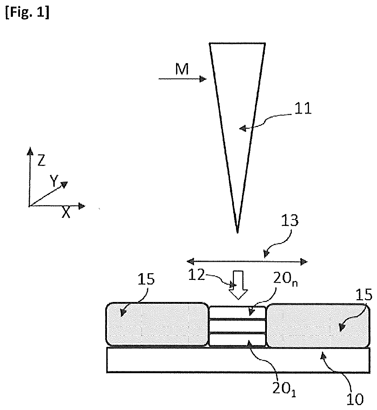

La Figure 1 schématise le fonctionnement d'un procédé de fabrication additive de type fusion sélective par laser (Selective Laser Melting ou SLM). Le métal d'apport 15 se présente sous la forme d'une poudre disposée sur un support 10. Une source d'énergie, en l'occurrence une source laser 11, émet un faisceau laser 12. La source laser est couplée au matériau d'apport par un système optique 13, dont le mouvement est déterminé en fonction d'un modèle numérique M. Le faisceau laser 12 se propage selon un axe de propagation Z, et suit un mouvement selon un plan XY, décrivant un motif dépendant du modèle numérique. Le plan est par exemple perpendiculaire à l'axe de propagation Z. L'interaction du faisceau laser 12 avec la poudre 15 engendre une fusion sélective de cette dernière, suivie d'une solidification, résultant en la formation d'une couche 20₁...20ₙ. Lorsqu'une couche a été formée, elle est recouverte de poudre 15 du métal d'apport et une autre couche est formée, superposée à la couche préalablement réalisée. L'épaisseur de la poudre formant une couche peut par exemple être comprise de 10 à 200 µm.

Pour les alliages d'aluminium, le support 10 ou plateau peut être chauffé à une température allant jusqu'à 350°C. Les machines disponibles actuellement sur le marché offrent généralement un chauffage du plateau jusqu'à 200°C. La température de chauffage du plateau peut être par exemple d'environ 50°C, 100°C, 150°C ou 200°C. Le chauffage du plateau permet généralement de réduire l'humidité au niveau du lit de poudre et aussi de réduire les contraintes résiduelles sur les pièces en fabrication. Le niveau d'humidité au niveau du lit de poudre semble présenter un effet direct sur la porosité de la pièce finale. En effet, il semblerait que plus l'humidité de la poudre est élevée, plus la porosité de la pièce finale est élevée. Il est à noter que le chauffage du plateau est l'une des possibilités existantes pour réaliser une fabrication additive à chaud. Cependant, la présente invention ne saurait être limitée à l'utilisation de ce seul moyen de chauffage. Tous les autres moyens de chauffage peuvent être utilisés dans le cadre de la présente invention pour chauffer et contrôler la température, par exemple une lampe infra-rouge. Ainsi, le procédé selon la présente invention peut être réalisé à une température allant jusqu'à 350°C.

La poudre peut présenter au moins l'une des caractéristiques suivantes :
- Taille moyenne de particules de 5 à 100 µm, de préférence de 5 à 25 µm, ou de 20 à 60 µm. Les valeurs données signifient qu'au moins 80 % des particules ont une taille moyenne dans la gamme spécifiée.
- Forme sphérique. La sphéricité d'une poudre peut par exemple être déterminée en utilisant un morphogranulomètre.
- Bonne coulabilité. La coulabilité d'une poudre peut par exemple être déterminée selon la norme ASTM B213 ou la norme ISO 4490 :2018. Selon la norme ISO 4490 :2018, le temps d'écoulement est de préférence inférieur à 50.
- Faible porosité, de préférence de 0 à 5 %, plus préférentiellement de 0 à 2 %, encore plus préférentiellement de 0 à 1 % en volume. La porosité peut notamment être déterminée par analyse d'images à partir de micrographies optiques ou par pycnométrie à l'hélium (voir la norme ASTM B923).
- Absence ou faible quantité (moins de 10 %, de préférence moins de 5 % en volume) de petites particules (1 à 20 % de la taille moyenne de la poudre), dites satellites, qui collent aux particules plus grosses.

La mise en oeuvre d'un tel procédé permet une fabrication de pièces selon un rendement élevé, pouvant atteindre voire dépasser 40 cm³/h.

Par ailleurs, la demanderesse a observé que l'application de traitements thermiques de type trempe pouvaient induire une distorsion de la pièce, du fait de la variation brutale de température. La distorsion de la pièce est généralement d'autant plus significative que ses dimensions sont importantes. Or, l'avantage d'un procédé de fabrication additif est précisément d'obtenir une pièce dont la forme, après fabrication est définitive, ou quasi-définitive. La survenue d'une déformation significative résultant d'un traitement thermique est donc à éviter. Par quasi-définitive, il est entendu qu'un usinage de finition peut être effectué sur la pièce après sa fabrication : la pièce fabriquée par fabrication additive s'étend selon sa forme définitive, à l'usinage de finition près.

Ayant constaté ce qui précède, la demanderesse a cherché une composition d'alliage, formant le matériau d'apport, permettant d'obtenir des propriétés mécaniques acceptables, sans nécessiter l'application de traitements thermiques, subséquents à la formation des couches, c'est-à-dire suite à la formation de la pièce finale, risquant d'induire une distorsion. Il s'agit notamment d'éviter les traitements thermiques impliquant une variation brutale de la température. Ainsi, l'invention permet d'obtenir, par fabrication additive, une pièce dont les propriétés mécaniques sont satisfaisantes, en particulier en termes de limite élastique. En fonction du type de procédé de fabrication additive choisi, le matériau d'apport peut se présenter sous la forme d'un fil ou d'une poudre.

La demanderesse a constaté qu'en limitant le nombre d'éléments présents dans l'alliage ayant une teneur au-delà de 1 % massique, on obtient un bon compromis entre les propriétés mécaniques et thermiques intéressantes. Il est usuellement admis que l'ajout d'éléments dans l'alliage permet d'améliorer certaines propriétés mécaniques de la pièce réalisée par fabrication additive. Par propriétés mécaniques, on entend par exemple la limite d'élasticité ou l'allongement à la rupture. Cependant, l'ajout d'une trop grande quantité, ou d'une trop grande diversité, d'éléments chimiques d'alliage peut nuire aux propriétés de conduction thermique de la pièce résultant de la fabrication additive. Ainsi, le recours à des alliages binaires ou ternaires, dans un procédé de fabrication additive, constitue une voie prometteuse dans le domaine de la fabrication additive.

La demanderesse a estimé qu'il était utile d'aboutir à un compromis entre le nombre et la quantité des éléments ajoutés dans l'alliage, de façon à obtenir des propriétés mécaniques et thermiques (ou électriques) acceptables.

La demanderesse considère qu'on obtient un tel compromis en limitant à un seul ou à deux le nombre d'éléments chimiques formant l'alliage d'aluminium ayant une fraction massique supérieure ou égale à 1%. Ainsi, un alliage particulièrement intéressant peut être obtenu en ajoutant, selon une fraction massique supérieure à 1 % :
- uniquement Zr, auquel cas l'alliage est essentiellement constitué par deux éléments (AI et Zr). Par exemple Zr : 0,5 % à 2,5 % et Fe < 1 % ;
- ou Zr et Fe, auquel cas l'alliage est essentiellement constitué par trois éléments (AI, Zr et Fe). La présence de Fe dans l'alliage permet d'améliorer les propriétés mécaniques, qu'il s'agisse des propriétés mécaniques en traction à chaud et à froid ou la dureté. Par exemple Zr : 0,5 % à 2,5 % et Fe ≥ 1 %.

La présence de Zr dans l'alliage confère une bonne processabilité de l'alliage, le terme processabilité correspondant à la désignation anglosaxonne "processability", qualifiant l'aptitude d'un alliage à être mis en forme par un procédé de fabrication additive. Cela se traduit, au niveau d'une pièce fabriquée par fabrication additive, par une quasi absence de défauts, de type fissuration, et une faible porosité. La demanderesse a constaté qu'une fraction massique de Zr supérieure à 0,5 %, confère une bonne processabilité. Une fraction massique de Zr optimale peut être comprise selon une première variante de 0,8 à 2,5 %, plus préférentiellement de 1 à 2,5 %, encore plus préférentiellement de 1,3 à 2,5 %. ; ou de préférence selon une deuxième variante de 0,5 à 2 %, plus préférentiellement de 0,6 à 1,8 %, plus préférentiellement de 0,6 à 1,6 %, plus préférentiellement de 0,7 à 1,5 %, plus préférentiellement de 0,8 à 1,5 % plus préférentiellement de 0,9 à 1,5 %, encore plus préférentiellement de 1 à 1,4 %. Lorsque Zr est inférieur à 0,5 %, les propriétés mécaniques ne sont généralement pas suffisantes.

La demanderesse a observé en procédé SLM et en présence de Zr, notamment pour une teneur en Zr > 0,5 %, au cours de la solidification de chaque couche, des grains équiaxes se formant en bas du cordon de lasage à partir de précipités Al₃Zr primaires qui se forment dans le liquide. Les précipités Al₃Zr primaires servent de germes, à partir desquels se forment des grains équiaxes d'aluminium. Le reste du cordon de lasage se solidifie sous la forme de grains colonnaires qui croissent du bord vers le centre du cordon d'une manière radiale. Plus la teneur en Zr est élevée, plus la fraction de grains équiaxes est importante et plus la fraction de grains colonnaires est faible. La présence d'une fraction suffisante de grains équiaxes est bénéfique pour éviter les fissurations de fin de solidification.

Cependant, lorsque la teneur en Zr est < 0,5 %, la concentration en précipités Al₃Zr primaires est trop faible, ce qui conduit à une formation de grains colonnaires grossiers qui peuvent traverser plusieurs couches, selon une croissance épitaxiale, progressant d'une couche à une autre couche. La pièce obtenue est ainsi plus sensible à la fissuration de solidification.

Cet effet de la teneur en Zr sur la sensibilité à la fissuration est spécifique au procédés de fabrication additive avec fusion de chaque couche comme le procédé SLM. Dans le cas de procédé non additif comme les procédés classiques dits de solidification rapide avec compactage et filage de pièces à partir de rubans fins solidifiés rapidement ou de poudre, des pièces en alliages avec des teneurs en Zr < 0,5 % peuvent être fabriquées sans fissuration. En effet, ces procédés ne nécessitent pas de fusion pendant l'étape de mise en forme et ne sont donc pas sujette aux fissures de solidification.

La demanderesse a également constaté que la présence de cuivre, ≤ 0,5 %, de préférence 0,05 à 0,5 %, préférentiellement 0,1 à 0,4 %, permet d'améliorer les propriétés mécaniques et le compromis conductivité électrique/limite élastique après traitement thermique.

De préférence, la fraction massique de Zr est comprise de 0,5 % à 2,5 %, de préférence selon une première variante de 0,8 % à 2,5 %, voire de 1 % à 2,5 %, voire de 1,2 % à 2,5 %, voire de 1,3 % à 2,5 %, voire de 1,5 % à 2,5 % ; ou de préférence selon une deuxième variante de 0,5 à 2 %, voire de 0,6 à 1,8 %, voire de 0,6 à 1,6 %, voire de 0,7 à 1,5 %, voire de 0,8 à 1,5 % voire de 0,9 à 1,5 %, voire de 1 à 1,4 %.

Lorsque l'alliage comporte Fe, la fraction massique de Fe est inférieure ou égale à 3 %. Elle est de préférence comprise de 0,5 % à 3 %, préférentiellement selon une première variante 0,8 à 2,5 %, préférentiellement 0,8 à 2 %, plus préférentiellement 0,8 à 1,2 ; ou préférentiellement selon une deuxième variante 1,5 à 2,5 %, préférentiellement 1,6 à 2,4 %, plus préférentiellement 1,7 à 2,3 %. Une association de Zr et de Fe est particulièrement avantageuse, comme précédemment mentionné, et confirmé par les essais expérimentaux. L'alliage peut également comporter d'autres éléments d'alliage, tels que Cr, V, Ti, Mn, Mo, W, Nb, Ta, Sc, Ni, Zn, Hf, Nd, Ce, Co, La, Ag, Li, Y, Yb, Er, Sn, In, Sb, Sr, Ba, Bi, Ca, P, B et/ou du mischmétal, selon une fraction massique individuellement strictement inférieure à 0,1 % de préférence inférieure à 500 ppm, et de préférence inférieure à 300 ppm, ou à 200 ppm, ou à 100 ppm. Cependant, certains de ces éléments d'alliage, en particulier Cr, V, Ti et Mo dégradent la conductivité. Cu est considéré comme moins néfaste à l'égard de la conductivité thermique et/ou électrique.

L'ajout de Mg en l'absence d'un traitement de mise en solution-trempe-revenu, abaisserait la conductivité électrique ou thermique sans impact significatif sur les propriétés mécaniques. A cela s'ajoute sa tendance à s'évaporer lors du procédé d'atomisation et SLM, surtout pour des alliages à haut liquidus comme ceux testés selon la présente invention. Ainsi selon une variante, l'alliage utilisé selon la présente invention ne comprend pas de Mg ou alors selon une quantité d'impureté, soit < 0,05 %.

Quand l'alliage comprend d'autres éléments d'alliage, comme Y, Yb, Er, Sn, In, Sb, ils sont de préférence présents selon une fraction massique strictement inférieure à 500 ppm, voire strictement inférieure à 300 ppm, voire strictement inférieure à 200 ppm ou à 100 ppm.

Il est à noter que, de préférence, les alliages selon la présente invention ne sont pas des alliages de type AA6xxx, en raison de l'absence d'ajout simultané de Si et Mg en quantités supérieures à 0,2 %.

A titre d'exemples, l'alliage d'aluminium utilisé selon la présente invention pourrait comprendre :
- Zr 1,52 % ; Fe 213 ppm ; Si 183 ppm ; impuretés : < 0,05 % chacune avec un cumul d'impuretés < 0,15 % ;
- Zr 1,23 % ; Fe 0,94 % ; impuretés < 0,05 % chacune avec un cumul < 0,15 % ;
- Zr 0,81 % ; Fe 1,83 % ; impuretés < 0,05 % chacune avec un cumul < 0,15 % ; ou
- Zr 1,39 % ; Cu 0,32 % ; impuretés < 0,05 % chacune avec un cumul < 0,15 %.

### Exemples expérimentaux

### Exemple 1

Des premiers essais ont été réalisés en utilisant un alliage 1, dont la composition massique mesurée par ICP comportait : Zr : 1,52 % ; Fe 213 ppm ; Si 183 ppm ; impuretés : < 0,05 % chacune avec un cumul d'impuretés < 0,15 %.

Des pièces de test ont été réalisées par SLM, en utilisant une machine de type EOS290 SLM (fournisseur EOS). Cette machine permet de chauffer le plateau sur lequel les pièces sont réalisées jusqu' à une température d'environ 200°C. Les essais ont été réalisés avec un plateau chauffé à environ 200°C, mais des essais complémentaires ont montré la bonne processabilité des alliages selon la présente invention à des températures de plateau plus faibles par exemple 25°C, 50°C, 100°C ou 150°C.

La puissance du laser était de 370 W. La vitesse de balayage était égale à 1400 mm/s. L'écart entre deux lignes adjacentes de balayage, usuellement désigné par le terme "écart vecteur" était de 0,11 mm. L'épaisseur de couche était de 60 µm.

La poudre utilisée présentait une taille de particule essentiellement comprise de 3 µm à 100 µm, avec une médiane de 40 µm, un fractile à 10 % de 16 µm et un fractile à 90 % de 79 µm.

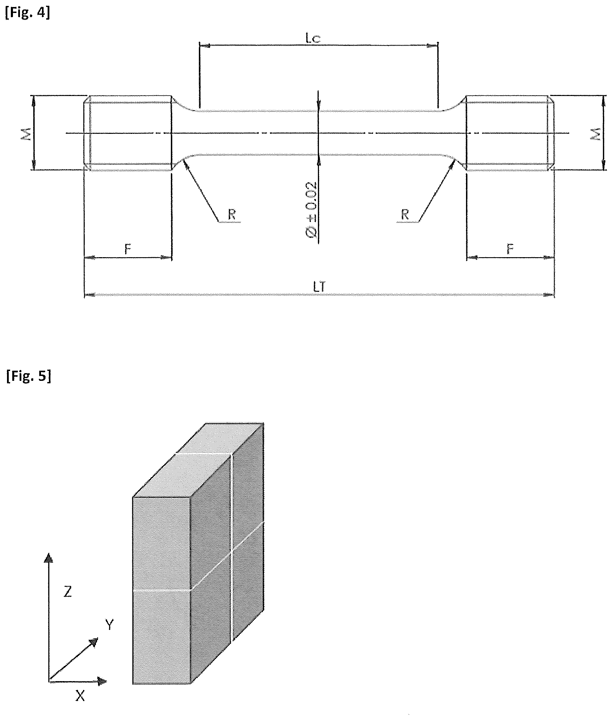

Des premières pièces de test ont été réalisées, sous la forme de cylindres pleins verticaux (direction Z) par rapport au plateau de construction qui en forme la base dans le plan (X-Y). Les cylindres avaient un diamètre de 11 mm et une hauteur de 46 mm. Des deuxièmes pièces de test ont été réalisées, prenant la forme de parallélépipèdes de dimensions 12 (direction X) x 45 (direction Y) x 46 (direction Z) mm (voir Figure 5). Toutes les pièces ont subi un traitement de détente post-fabrication SLM de 4 heures à 300°C.

Certaines premières pièces ont subi un traitement thermique post fabrication à 350°C, 400°C ou 450°C, la durée du traitement étant comprise de 1 h à 104 h. L'ensemble des premières pièces (avec et sans traitement thermique post-fabrication) ont été usinées pour obtenir des éprouvettes de traction cylindriques ayant les caractéristiques suivantes en mm (voir Tableau 1 et Figure 4) :
Dans la Figure 4 et le Tableau 1, Ø représente le diamètre de la partie centrale de l'éprouvette, M la largeur des deux extrémités de l'éprouvette, LT la longueur totale de l'éprouvette, R le rayon de courbure entre la partie centrale et les extrémités de l'éprouvette, Le la longueur de la partie centrale de l'éprouvette et F la longueur des deux extrémités de l'éprouvette.

**[Tableau 1]**

| **Type** | **Ø** | **M** | **LT** | **R** | **Lc** | **F** |
|---|---|---|---|---|---|---|
| TOR 4 | 4 | 8 | 45 | 3 | 22 | 8,7 |

Ces éprouvettes cylindriques ont été testées en traction à température ambiante selon la norme NF EN ISO 6892-1 (2009-10).

Certaines deuxièmes pièces de test ont subi un traitement thermique post fabrication, tel que décrit en lien avec les premières pièces. Les deuxièmes pièces de test ont été soumises à des essais de conductivité électrique, en se basant sur le fait que la conductivité électrique évolue de façon similaire à la conductivité thermique. Une relation de dépendance linéaire de la conductivité thermique et de la conductivité électrique, selon la loi de Wiedemann Franz, a été validée dans la publication Hatch "Aluminium properties and physical metallurgy" ASM Metals Park, OH, 1988. Les deuxièmes pièces de test ont subi un polissage de surface sur chaque face de 45 mm × 46 mm en vue des mesures de conductivité à l'aide d'un papier abrasif de rugosité 180. Les mesures de conductivité électrique ont été effectuées sur les faces polies en utilisant un appareil de mesure de type Foerster Sigmatest 2.069 at 60 kHz.

Le Tableau 2 ci-après représente, pour chaque première pièce de test, la température de traitement thermique (°C), la durée de traitement thermique, la limite d'élasticité à 0,2 % Rp0.2 (MPa), la résistance à la traction (Rm), l'allongement à la rupture A (%), ainsi que la conductivité électrique (MS.m⁻¹). Les propriétés de traction (limite d'élasticité, résistance à la traction et allongement à la rupture) ont été déterminées à partir des premières pièces de test, selon la direction de fabrication Z, tandis que les propriétés électriques (conductivité électrique) ont été déterminées sur les deuxièmes pièces de test. Dans le Tableau 2 ci-après, la durée de 0h correspond à une absence de traitement thermique.

**[Tableau 2]**

| **Durée (h)** | **Température (°C)** | **Rp0.2 (MPa)** | **Rm (MPa)** | **A (%)** | **σ (MS/m)** |
|---|---|---|---|---|---|
| 0 | - | 109 | 148 | 22 | 21.12 |
| 14 | 350 | 240 | 257 | 7.7 | 28.46 |
| 56 | 350 | 231 | 262 | 8.4 | 29.68 |
| 1 | 400 | 234 | 262 | 9.8 | 28.56 |
| 4 | 400 | 235 | 266 | 8.6 | 29.61 |
| 10 | 400 | 227 | 259 | 7.7 | 30.52 |
| 100 | 400 | 198 | 238 | 9.2 | 32.23 |
| 104 | 450 | 145 | 181 | 8.7 | 33.43 |

Sans application d'un traitement thermique, les propriétés mécaniques sont jugées satisfaisantes. Cependant, l'application d'un traitement thermique approprié permet d'améliorer la limite d'élasticité, la résistance à la traction ainsi que la conductivité électrique. On attribue l'effet bénéfique du traitement thermique à la formation de précipités Al₃Zr nanométriques, ce qui conduit à une augmentation simultanée de la limite élastique et de la conductivité. En l'absence de traitement thermique, une fraction de Zr est maintenue piégée en solution solide.

Un aspect remarquable est que le traitement thermique permet d'augmenter très significativement la conductivité électrique, cette dernière se rapprochant de celle de l'aluminium pur (proche de 34 MS/m), tout en augmentant également les propriétés mécaniques par rapport à celles de l'aluminium pur.

Les paramètres permettant d'obtenir de bonnes propriétés mécaniques sont les suivants :
- à 400°C, la durée étant comprise de 1h à 10 h ;
- à 350°C, la durée étant comprise de 10 h à 100 h, sachant qu'une durée comprise de 10 h à 20 h semble suffisante.

Aussi, lorsqu'un traitement thermique est appliqué, il est préférable que sa température soit inférieure à 500°C. Lorsqu'on privilégie l'obtention de propriétés mécaniques optimales, la température du traitement thermique est de préférence inférieure à 450°C, et par exemple comprise de 300°C à 420°C.

Lorsqu'on privilégie la conduction électrique ou thermique, la température du traitement thermique est de préférence supérieure ou égale à 350°C voire 400°C, avec une durée pouvant dépasser 100 h, par exemple de 90 à 200 h.

On observe que lorsque le traitement thermique est effectué à 400°C, l'évolution des propriétés mécaniques de traction (limite d'élasticité, résistance à la traction), en fonction de la durée du traitement, est tout d'abord croissante, puis décroissante. Une durée optimale de traitement thermique permet d'optimiser les propriétés mécaniques de traction. Elle est comprise de 0,1h à 10 h à 400°C.

Le traitement thermique est de préférence un revenu ou un recuit.

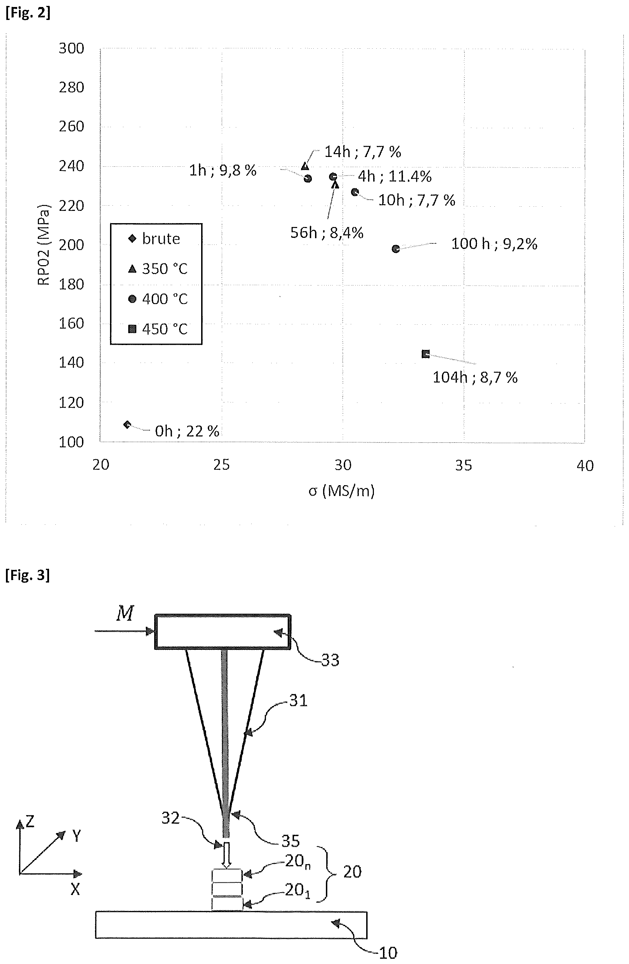

La Figure 2 illustre les propriétés de traction (axe des ordonnées, représentant la limite d'élasticité Rp0.2 exprimée en MPa) en fonction des propriétés de conductivité thermiques (axe des abscisses, représentant la conductivité thermique exprimée en MS/m). Il est rappelé que les propriétés de conduction thermique sont supposées être représentatives des propriétés de conduction électrique. Sur la Figure 2, les pourcentages indiquent l'allongement à la rupture. On a représenté, par une flèche, l'effet bénéfique du traitement thermique, à la fois du point de vue de la conductivité électrique que de la limite d'élasticité. Dans la légende de la Figure 2, le terme "brute" signifie une absence de traitement thermique.

La densité relative des échantillons était supérieure à 99,5 %, ce qui traduit une porosité < 0,5 %, cette dernière ayant été estimée par analyse d'image sur une coupe d'échantillons polie.

Un deuxième essai a été réalisé en utilisant :
- un alliage 1 tel que décrit ci-avant ;
- un alliage2, dont la composition massique mesurée par ICP comportait Al ; Zr 1,78 % ; Fe 1,04 % ; Si 1812 ppm ; Cu 503 ppm ; impuretés < 0,05 % chacune avec un cumul d'impuretés < 0,15 %.

On a formé des pièces de test similaires à celles décrites en lien avec le premier essai.

La poudre utilisée présentait une taille de particule essentiellement comprise de 3 µm à 100 µm, avec une médiane de 41 µm, un fractile à 10 % de 15 µm et un fractile à 90 % de 82 µm.

On a caractérisé la dureté Vickers Hv0.2, selon la norme ASTM E384, ainsi que la conductivité électrique, sur des pièces parallélépipédiques. Les mesures de dureté et de conductivité ont été réalisées en l'absence de traitement thermique ainsi qu'après différents traitements thermiques.

Le Tableau 3 présente les résultats des caractérisations. N/A signifie que la caractéristique n'a pas été mesurée.

**[Tableau 3]**

| **Alliage** | **Traitement thermique** | **Hv 0.2** | **Conductivité électrique (Ms/m)** |
|---|---|---|---|
| Alliage 2 | aucun | 79 | 18.11 |
| Alliage 2 | 400°C - 1 h | 92 | 24 |
| Alliage 2 | 400°C -4 h | 99 | 26 |
| Alliage 1 | aucun | 51.2 | 21.12 |
| Alliage 1 | 400°C - 4 h | 93 | 29.61 |

Les essais confirment que :
- la présence de Fe améliore significativement les propriétés mécaniques ;
- l'application d'un traitement thermique améliore les propriétés mécaniques et de conduction électrique.

### Exemple 2

Un deuxième essai similaire à celui de l'exemple 1 a été réalisé en utilisant l'alliage 2 tel que décrit ci-avant en lien avec l'exemple 1.

La poudre utilisée présentait une taille de particules essentiellement comprise de 3 µm à 100 µm, avec une médiane de 41 µm, un fractile à 10 % de 15 µm et un fractile à 90 % de 82 µm.

Des pièces de test ont été réalisées par SLM, en utilisant une machine de type EOS M290 SLM (fournisseur EOS). La puissance du laser était de 370 W. La vitesse de balayage était égale à 1250 mm/s. L'écart entre deux lignes adjacentes de balayage, usuellement désigné par le terme "écart vecteur" était de 0.111 mm. L'épaisseur de couche était de 60 µm.

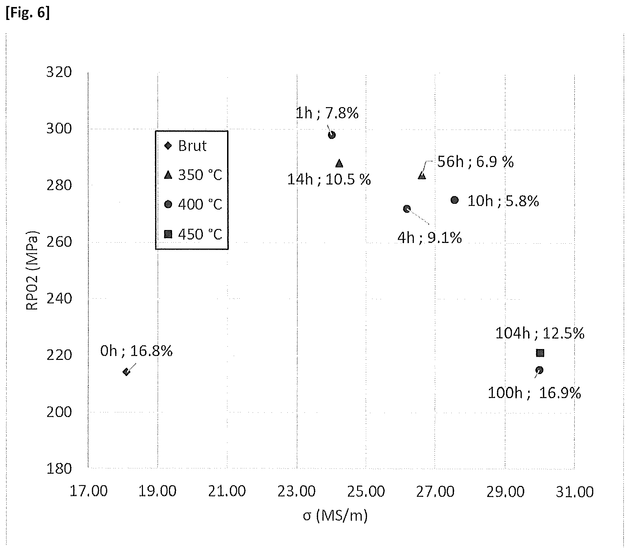

Comme pour l'exemple 1, l'ajout d'un traitement thermique jusqu'à 100 h à 400°C ou 450°C a permis d'augmenter d'une manière simultanée la résistance mécanique et la conductivité électrique par rapport à l'état brut de détente, comme illustré dans le Tableau 4 ci-après et la Figure 6.

**[Tableau 4]**

| **Durée (h)** | **Température (°C)** | **Rp0.2 (MPa)** | **Rm (MPa)** | **A (%)** | **σ (MS/m)** |
|---|---|---|---|---|---|
| 0 | - | 214 | 240 | 16.8 | 18.11 |
| 14 | 350 | 288 | 301 | 10.5 | 24.23 |
| 56 | 350 | 284 | 300 | 6.9 | 26.62 |
| 1 | 400 | 298 | 307 | 7.8 | 24.00 |
| 4 | 400 | 272 | 293 | 9.1 | 26.19 |
| 10 | 400 | 275 | 292 | 5.8 | 27.55 |
| 100 | 400 | 215 | 238 | 16.9 | 29.98 |
| 104 | 450 | 221 | 244 | 12.5 | 30.00 |

L'alliage 2 a permis de montrer l'impact positif de l'ajout de Fe sur l'augmentation de la limite élastique Rp02 et de la résistance à la rupture Rm (sans dégradation significative de la conductivité électrique) par rapport à l'alliage 1 de l'exemple 1. Cet alliage 2 a permis d'atteindre après traitement thermique des valeurs de Rp02 et de Rm non atteignables par l'alliage 1 de l'exemple 1, avec des valeurs de Rp02 supérieures à 260 MPa tout en maintenant une conductivité électrique supérieure à 24 MS/m voire à 26 MS/m.

Sans être lié par la théorie, il semblerait que, dans les pièces fabriquées par des procédés classiques comme l'usinage à partir de blocs obtenus par corroyage, le Fe est présent sous forme d'intermétalliques grossiers avec une taille allant jusqu'à quelques dizaines de µm. Au contraire, dans les pièces fabriquées par fusion laser sélective à partir de l'alliage 2 de l'exemple 2, le Fe est présent sous forme de précipités nanométriques qui ne présentent pas d'impact négatif sur la tenue en corrosion ni sur l'aptitude de l'alliage à l'anodisation. La présence de précipités nanométriques à base de Fe semble au contraire présenter un impact positif sur la tenue en corrosion en conduisant à une corrosion latéralisée et non localisée des pièces testées.

### Exemple 3

Un troisième essai similaire à celui de l'exemple 2 a été réalisé en utilisant un alliage 3, dont la composition massique mesurée par ICP comportait : Al ; Zr 1,23 % ; Fe 0,94 % ;
impuretés < 0,05 % chacune avec un cumul d'impuretés < 0,15 %.

La poudre utilisée présentait une taille de particules essentiellement comprise de 3 µm à 100 µm, avec une médiane de 37 µm, un fractile à 10 % de 15 µm et un fractile à 90 % de 71 µm.

Des pièces de test ont été réalisées par SLM, en utilisant une machine de type EOS M290 SLM (fournisseur EOS). La puissance du laser était de 370 W. La vitesse de balayage était égale à 1250 mm/s. L'écart entre deux lignes adjacentes de balayage, usuellement désigné par le terme "écart vecteur" était de 0.111 mm. L'épaisseur de couche était de 60 µm.

Comme pour l'exemple 2, l'ajout d'un traitement thermique jusqu'à 100 h à 400°C a permis d'augmenter d'une manière simultanée la résistance mécanique et la conductivité électrique par rapport à l'état brut de détente, comme illustré dans le Tableau 5 ci-après.

**[Tableau 5]**

| **Durée (h)** | **Température (°C)** | **Rp0.2 (MPa)** | **Rm (MPa)** | **A (%)** | **σ (MS/m)** |
|---|---|---|---|---|---|
| 0 | - | 133 | 198 | 26,2 | 18,69 |
| 14 | 350 | 257 | 285 | 17,7 | 26,57 |
| 56 | 350 | 263 | 284 | 17,1 | 27,45 |
| 1 | 400 | 290 | 308 | 13,7 | 25,38 |
| 4 | 400 | 299 | 309 | 15,1 | 27,65 |
| 10 | 400 | 269 | 284 | 12 | 28,51 |
| 100 | 400 | 172 | 216 | 13,6 | 31,02 |
| 104 | 450 | 115 | 162 | 20,3 | 32,42 |

La baisse de la teneur en Zr de l'alliage 3 par rapport à celle de l'alliage 2 (respectivement 1,23 % vs 1,78 % de Zr) a conduit à une augmentation significative des valeurs de l'allongement et de la conductivité électrique, et ceci pour l'ensemble des traitements thermiques post fabrication testés (voir tableaux 4 et 5 ci-avant). L'alliage 3 présentait également un état brut de fabrication plus mou que celui de l'alliage 2 : Rp02 respectivement de 133 MPa vs 214 MPa. Cet état brut plus mou est avantageux en termes de processabilité lors du procédé SLM, car il permet une réduction significative des contraintes résiduelles lors de la fabrication de la pièce. Les meilleures résistances mécaniques de l'alliage 3 et de l'alliage 2 étaient similaires et ont été obtenues pour un traitement thermique post fabrication de respectivement 4h à 400°C contre 1h à 400°C. Dans ces conditions de maximisation de la résistance mécanique, l'alliage 3 présentait l'avantage d'offrir à la fois un meilleur allongement et une meilleure conductivité électrique.

### Exemple 4

Un quatrième essai similaire à celui de l'exemple 2 a été réalisé en utilisant un alliage 4, dont la composition massique mesurée par ICP comportait : Al ; Zr 0,81 % ; Fe 1,83 % ;
impuretés < 0,05 % chacune avec un cumul d'impuretés < 0,15 %.

La poudre utilisée présentait une taille de particules essentiellement comprise de 3 µm à 100 µm, avec une médiane de 38 µm, un fractile à 10 % de 15 µm et un fractile à 90 % de 75 µm.

Des pièces de test ont été réalisées par SLM, en utilisant une machine de type EOS M290 SLM (fournisseur EOS). La puissance du laser était de 370 W. La vitesse de balayage était égale à 1250 mm/s. L'écart entre deux lignes adjacentes de balayage, usuellement désigné par le terme "écart vecteur" était de 0.111 mm. L'épaisseur de couche était de 60 µm.

Comme pour l'exemple 2, l'ajout d'un traitement thermique jusqu'à 100 h à 400°C ou 450°C a permis d'augmenter d'une manière simultanée la résistance mécanique et la conductivité électrique par rapport à l'état brut de détente, comme illustré dans le Tableau 6 ci-après. L'alliage 4 a permis de montrer l'intérêt d'une baisse de la teneur en Zr associée à un ajout de 1.83 % de Fe par rapport à l'alliage 1.

Les meilleures résistances mécaniques de l'alliage 4 et de l'alliage 1 ont été obtenues pour un traitement thermique de 4h à 400°C. Dans ces conditions de maximisation de la résistance mécanique, l'alliage 4 présentait par rapport à l'alliage 1 une augmentation significative du Rp02 et de l'allongement avec une diminution de la conductivité électrique, voir tableau 2 ci-avant et tableau 6 ci-après.

**[Tableau 6]**

| **Durée (h)** | **Température (°C)** | **Rp0.2 (MPa)** | **Rm (MPa)** | **A (%)** | **σ (MS/m)** |
|---|---|---|---|---|---|
| 0 | - | 118 | 215 | 18,1 | 19,16 |
| 14 | 350 | 241 | 297 | 15,9 | 24,97 |
| 56 | 350 | 267 | 313 | 12,8 | 27,61 |
| 1 | 400 | 187 | 258 | 14,9 | 23,45 |
| 4 | 400 | 278 | 316 | 18,8 | 28,1 |
| 10 | 400 | 240 | 283 | 12,9 | 29 |
| 100 | 400 | 210 | 257 | 14,2 | 30,28 |
| 104 | 450 | 127 | 186 | 20,3 | 31,64 |

### Exemple 5

Un cinquième essai similaire à celui de l'exemple 2 a été réalisé en utilisant un alliage 5, dont la composition massique mesurée par ICP comportait : Al ; Zr 1,39 % ; Cu 0,32 % ;
impuretés < 0,05 % chacune avec un cumul d'impuretés < 0,15 %.

La poudre utilisée présentait une taille de particules essentiellement comprise de 3 µm à 100 µm, avec une médiane de 27 µm, un fractile à 10 % de 11 µm et un fractile à 90 % de 54 µm.

Des pièces de test ont été réalisées par SLM, en utilisant une machine de type EOS M290 SLM (fournisseur EOS). La puissance du laser était de 370 W. La vitesse de balayage était égale à 1250 mm/s. L'écart entre deux lignes adjacentes de balayage, usuellement désigné par le terme "écart vecteur" était de 0.111 mm. L'épaisseur de couche était de 60 µm.

Comme pour l'exemple 2, l'ajout d'un traitement thermique jusqu'à 100 h à 400°C ou 450°C a permis d'augmenter de manière simultanée la résistance mécanique et la conductivité électrique par rapport à l'état brut de détente, comme illustré dans le Tableau 7 ci-après. L'alliage 5 a permis de montrer l'intérêt d'une baisse de la teneur en Zr associée à un ajout de 0.32 % de Cu par rapport à l'alliage 1. En effet, l'alliage 5 présentait à la fois une meilleure résistance mécanique et un meilleur allongement que l'alliage 1, et ceci pour l'ensemble des traitements thermiques post fabrication testés à 350°C et à 400°C.

Les meilleures résistances mécaniques de l'alliage 1 ont été obtenues pour un traitement thermique de 4h à 400°C. Dans ces conditions, l'alliage 5 présentait par rapport à l'alliage 1 une augmentation significative du Rp02 et de l'allongement, associée à une très faible diminution de la conductivité électrique, voir le tableau 2 ci-avant et le tableau 7 ci-après. L'alliage 5 a permis de montrer l'impact positif de l'ajout de Cu associé à une baisse de Zr sur l'augmentation de la limite élastique Rp02 et de la résistance à la rupture Rm (sans dégradation significative de la conductivité électrique) par rapport à l'alliage 1 de l'exemple 1.

**[Tableau 7]**

| **Durée (h)** | **Température (°C)** | **Rp0.2 (MPa)** | **Rm (MPa)** | **A (%)** | **σ (MS/m)** |
|---|---|---|---|---|---|
| 0 | - | 153 | 193 | 27,5 | 21,85 |
| 14 | 350 | 258 | 280 | 19,2 | 28,12 |
| 56 | 350 | 256 | 276 | 18,7 | 29,44 |
| 1 | 400 | 279 | 304 | 18,6 | 27,81 |
| 4 | 400 | 276 | 298 | 19,95 | 29,26 |
| 10 | 400 | 252 | 276 | 16,8 | 29,95 |
| 100 | 400 | 217 | 251 | 16,9 | 31,55 |
| 104 | 450 | 129 | 184 | 19,1 | 32,35 |

### Exemple 6

Des essais supplémentaires de traction à chaud ont été réalisés sur les alliages 3 et 4 décrits respectivement dans les exemples 3 et 4.

De la même manière que celle décrite dans l'exemple 1, des pièces de tests ont été construites sous forme de cylindres pleins verticaux (direction Z) par rapport au plateau de construction qui en forme la base dans le plan (X-Y). Les cylindres avaient un diamètre de 11 mm et une hauteur de 46 mm.

Ces pièces de test ont été réalisées par SLM, en utilisant une machine de type EOS M290 SLM (fournisseur EOS) et en suivant 2 sets de paramètres SLM différents désignés par Set 1 et Set 2 comme suit :
Set 1 :
   - Puissance du laser : 370 W
   - Vitesse de balayage : 1250 mm/s
   - Ecart vecteur : 0.111 mm
   - Epaisseur de couche : 60 µm.
Set 2 :
   - Puissance du laser : 370 W
   - Vitesse de balayage : 1307 mm/s
   - Ecart vecteur : 0.177 mm
   - Epaisseur de couche : 60 µm.

Toutes les pièces ont subi un traitement de détente post-fabrication SLM de 4 heures à 300°C. Certaines pièces ont subi un traitement thermique post fabrication à 400°C, la durée du traitement étant comprise entre 1 h et 4 h (voir tableau 8 ci-après). Toutes les premières pièces (avec et sans traitement thermique post-fabrication) ont été usinées pour former des éprouvettes de traction cylindriques similaires à celles décrites dans l'exemple 1 (voir Figure 4 et le Tableau 1 ci-avant).

Des essais de traction à haute température (200°C) ont été réalisés à partir des éprouvettes de traction obtenues en suivant la norme NF EN ISO 6892-1 (2009-10). Les résultats de ces essais sont synthétisés dans le tableau 8 ci-après. Pour chaque même condition testée, l'alliage 4 présentait des meilleures performances mécaniques (Rp0.2 et Rm) que l'alliage 3.

L'exemple 6 a permis de montrer l'impact positif de l'augmentation de la teneur en Fe associée à une baisse de la teneur en Zr sur les propriétés mécaniques à haute température (comparaison entre performances de l'alliage 3 et de l'alliage 4).

**[Tableau 8]**

| **Alliage** | **Set de paramètre SLM** | **Durée (h)** | **Température (°C)** | **RP02 (MPa)** | **Rm (MPa)** |
|---|---|---|---|---|---|
| Alliage 3 | Set 1 | - | - | 120 | 152 |
| Alliage 3 | Set 1 | 1 | 400 | 98 | 128 |
| Alliage 3 | Set 2 | 1 | 400 | 108 | 135 |
| Alliage 3 | Set 2 | 4 | 400 | 111 | 138 |
| Alliage 4 | Set 1 | - | - | 127 | 168 |
| Alliage 4 | Set 1 | 1 | 400 | 126 | 156 |
| Alliage 4 | Set 2 | 1 | 400 | 131 | 158 |
| Alliage 4 | Set 2 | 4 | 400 | 145 | 158 |

Selon un mode de réalisation, le procédé peut comporter une compression isostatique à chaud (CIC). Le traitement CIC peut notamment permettre d'améliorer les propriétés d'allongement et les propriétés en fatigue. La compression isostatique à chaud peut être réalisée avant, après ou à la place du traitement thermique. Avantageusement, la compression isostatique à chaud est réalisée à une température de 250°C à 500°C et de préférence de 300°C à 450°C, à une pression de 500 à 3000 bars et pendant une durée de 0,5 à 50 heures.

L'éventuel traitement thermique et/ou la compression isostatique à chaud permet en particulier d'augmenter la dureté ou la limite élastique et la conductivité électrique du produit obtenu. Il est cependant à noter que, généralement, plus la température est élevée, plus on favorise la conductivité (électrique ou thermique) au détriment des résistances mécaniques. Selon un autre mode de réalisation, adapté aux alliages à durcissement structural, on peut réaliser une mise en solution suivie d'une trempe et d'un revenu de la pièce formée et/ou une compression isostatique à chaud. La compression isostatique à chaud peut dans ce cas avantageusement se substituer à la mise en solution.

Cependant le procédé selon l'invention est avantageux, car il ne nécessite de préférence pas de traitement de mise en solution suivi de trempe. La mise en solution peut avoir un effet néfaste sur la résistance mécanique dans certains cas en participant à un grossissement des dispersoïdes ou des phases intermétalliques fines.

Selon un mode de réalisation, le procédé selon la présente invention comporte en outre optionnellement un traitement d'usinage, et/ou un traitement de surface chimique, électrochimique ou mécanique, et/ou une tribofinition. Ces traitements peuvent être réalisés notamment pour réduire la rugosité et/ou améliorer la résistance à la corrosion et/ou améliorer la résistance à l'initiation de fissures en fatigue.

Optionnellement, il est possible de réaliser une déformation mécanique de la pièce, par exemple après la fabrication additive et/ou avant le traitement thermique.

Bien que décrit en lien avec une méthode de fabrication additive de type SLM, le procédé peut être appliqué à d'autres méthodes de fabrication additive de type WAAM, évoqué en lien avec l'art antérieur. La Figure 3 représente une telle alternative. Une source d'énergie 31, en l'occurrence une torche, forme un arc électrique 32. Dans ce dispositif, la torche 31 est maintenue par un robot de soudage 33. La pièce 20 à fabriquer est disposée sur un support 10. Dans cet exemple, la pièce fabriquée est un mur s'étendant selon un axe transversal Z perpendiculairement à un plan XY défini par le support 10. Sous l'effet de l'arc électrique 12, un fil d'apport 35 entre en fusion pour former un cordon de soudure. Le robot de soudage est commandé par un modèle numérique M. Il est déplacé de façon à former différentes couches 20₁...20ₙ, empilées les unes sur les autres, formant le mur 20, chaque couche correspondant à un cordon de soudure. Chaque couche 20₁...20ₙ s'étend dans le plan XY, selon un motif défini par le modèle numérique M.

Le diamètre du fil d'apport est de préférence inférieur à 3 mm. Il peut être compris de 0,5 mm à 3 mm et est de préférence compris de 0,5 mm à 2 mm, voire de 1 mm à 2 mm. Il est par exemple de 1,2 mm.

D'autres procédés sont par ailleurs envisageables, par exemple, et de façon non limitative :
- frittage sélectif par laser (Sélective Laser Sintering ou SLS) ;
- frittage direct du métal par laser (Direct Metal Laser Sintering ou DMLS) ;
- frittage sélectif par chauffage (Selective Heat Sintering ou SHS) ;
- fusion par faisceau d'électrons (Electron Beam Melting ou EBM) ;
- dépôt par fusion laser (Laser Melting Deposition) ;
- dépôt direct par apport d'énergie (Direct Energy Déposition ou DED) ;
- dépôt direct de métal (Direct Metal Deposition ou DMD) ;
- dépôt direct par laser (Direct Laser Déposition ou DLD) ;
- technologie de dépôt par Laser (Laser Déposition Technology) ;
- ingénierie de formes nettes par laser (Laser Engineering Net Shaping) ;
- technologie de plaquage par laser (Laser Cladding Technology) ;
- technologie de fabrication de formes libres par laser (Laser Freeform Manufacturing Technology ou LFMT) ;
- dépôt par fusion laser (Laser Metal Deposition ou LMD) ;
- pulvérisation à froid (Cold Spray Consolidation ou CSC) ;
- fabrication additive par friction (Additive Friction Stir ou AFS) ;
- frittage par étincelle au plasma ou frittage flash (Field Assisted Sintering Technology, FAST ou spark plasma sintering) ; ou
- soudage par friction rotative (Inertia Rotary Friction Welding ou IRFW).

Les solutions selon la présente invention sont particulièrement adaptées pour le procédé de pulvérisation à froid (dit de « cold spray »), notamment à cause d'une faible dureté de la poudre, ce qui facilite la déposition. La pièce peut ensuite être durcie par un recuit de durcissement (post-traitement thermique).

Les solutions selon la présente invention sont particulièrement adaptées pour les applications dans les domaines électrique, électronique et des échangeurs de chaleur.

## Revendications

1. Procédé de fabrication d'une pièce (20) comportant une formation de couches métalliques successives (20₁...20ₙ), superposées les unes aux autres, chaque couche étant formée par le dépôt d'un métal d'apport (15, 25), le métal d'apport étant soumis à un apport d'énergie de façon à entrer en fusion et à constituer, en se solidifiant, ladite couche, le procédé étant **caractérisé en ce que** le métal d'apport (15, 25) est un alliage d'aluminium comportant les éléments d'alliage suivant (% en poids) :
- Zr : 0,5 à 2,5 %, de préférence selon une première variante 0,8 à 2,5 %, plus préférentiellement 1 à 2,5 %, encore plus préférentiellement 1,3 à 2,5 %. ; ou de préférence selon une deuxième variante 0,5 à 2 %, plus préférentiellement 0,6 à 1,8 %, plus préférentiellement 0,6 à 1,6 %, plus préférentiellement 0,7 à 1,5 %, plus préférentiellement 0,8 à 1,5 % plus préférentiellement 0,9 à 1,5 %, encore plus préférentiellement 1 à 1,4 % ;
- Fe : 0 % à 3 %, de préférence 0,5 % à 2,5 % ; préférentiellement selon une première variante 0,8 à 2,5 %, préférentiellement 0,8 à 2 %, plus préférentiellement 0,8 à 1,2 ; ou préférentiellement selon une deuxième variante 1,5 à 2,5 %, préférentiellement 1,6 à 2,4 %, plus préférentiellement 1,7 à 2,3 % ;
- éventuellement Si : ≤ 0,3 %, de préférence ≤ 0,2 %, plus préférentiellement ≤ 0,1 % ;
- éventuellement Cu : ≤ 0,5 %, de préférence 0,05 à 0,5 %, préférentiellement 0,1 à 0,4 % ;
- éventuellement Mg : ≤ 0,2 %, de préférence ≤ 0,1 % de préférence < 0,05 % ;
- autres éléments d'alliage < 0,1 % individuellement, et au total < 0,5 % ;
- impuretés : < 0,05 % individuellement, et au total < 0,15 % ;
reste aluminium.

2. Procédé selon la revendication 1, dans lequel les autres éléments sont choisis parmi : Cr, V, Ti, Mn, Mo, W, Nb, Ta, Sc, Ni, Zn, Hf, Nd, Ce, Co, La, Ag, Li, Y, Yb, Er, Sn, In, Sb, Sr, Ba, Bi, Ca, P, B et/ou du mischmétal.

3. Procédé selon l'une quelconque des revendications précédentes, dans lequel la fraction massique de chaque autre élément d'alliage est inférieure à 300 ppm, voire inférieure à 200 ppm, voire inférieure à 100 ppm.

4. Procédé selon l'une quelconque des revendications précédentes, dans lequel :
- Zr : 0,5 % à 2,5 % ;
- Fe ≥ 1 %.

5. Procédé selon l'une quelconque des revendications 1 à 3, dans lequel :
- Zr : 0,5 % à 2,5 % ;
- Fe : < 1 %.

6. Procédé selon l'une quelconque des revendications précédentes, comportant, suite à la formation des couches (20₁...20ₙ), c'est-à-dire suite à la formation de la pièce finale, une application d'un traitement thermique.

7. Procédé selon la revendication 6, dans lequel le traitement thermique est un revenu ou un recuit.

8. Procédé selon l'une quelconque des revendications 6 ou 7, dans lequel le traitement thermique est effectué :
- à une température supérieure 400°C, auquel cas la durée du traitement thermique est comprise de 0,1h à 10h ;
- ou à une température comprise de 300°C à 400°C, auquel cas la durée du traitement thermique est comprise de 0,5 h à 100 h.

9. Procédé selon l'une quelconque des revendications 6 ou 7 dans lequel le traitement thermique est effectué à une température supérieure ou égale à 350°C voire à 400°C, ou une durée de 90 à 200h, de façon à obtenir une conductivité thermique ou électrique optimale.

10. Procédé selon l'une quelconque des revendications précédentes, ne comportant pas de trempe suite à la formation des couches, c'est-à-dire suite à la formation de la pièce finale, ou suite au traitement thermique.

11. Procédé selon l'une quelconque des revendications précédentes, **caractérisé en ce qu'**il est réalisé à une température allant jusqu'à 350°C.

12. Procédé selon l'une quelconque des revendications précédentes, dans lequel le métal d'apport prend la forme d'une poudre (15), dont l'exposition à un faisceau de lumière (12) ou de particules chargées résulte en une fusion localisée suivie d'une solidification, de façon à former une couche solide (20₁...20ₙ).

13. Procédé selon l'une quelconque des revendications 1 à 11, dans lequel le métal d'apport étant issu d'un fil d'apport (25), dont l'exposition à une source de chaleur (22) résulte en une fusion localisée suivie d'une solidification, de façon à former une couche solide (20₁...20ₙ).

14. Pièce métallique obtenue par un procédé objet de l'une quelconque des revendications précédentes.

15. Poudre, destinée à être utilisée en tant que matériau d'apport d'un procédé de fabrication additive, **caractérisé en ce qu'**elle est constituée d'un alliage d'aluminium, comportant les éléments d'alliage suivants (% en poids) :
- Zr : 0,5 % à 2,5 %, de préférence selon une première variante 0,8 à 2,5 %, plus préférentiellement 1 à 2,5 %, encore plus préférentiellement 1,3 à 2,5 %. ; ou de préférence selon une deuxième variante 0,5 à 2 %, plus préférentiellement 0,6 à 1,8 %, plus préférentiellement 0,6 à 1,6 %, plus préférentiellement 0,7 à 1,5 %, plus préférentiellement 0,8 à 1,5 % plus préférentiellement 0,9 à 1,5 %, encore plus préférentiellement 1 à 1,4 % ;
- Fe : 0 % à 3 %, de préférence 0,5 % à 2,5 % ; préférentiellement selon une première variante 0,8 à 2,5 %, préférentiellement 0,8 à 2 %, plus préférentiellement 0,8 à 1,2 ; ou préférentiellement selon une deuxième variante 1,5 à 2,5 %, préférentiellement 1,6 à 2,4 %, plus préférentiellement 1,7 à 2,3 % ;
- éventuellement Si : ≤ 0,3 %, de préférence ≤ 0,2 %, plus préférentiellement ≤ 0,1 % ;
- éventuellement Cu : ≤ 0,5 %, de préférence 0,05 à 0,5 %, préférentiellement 0,1 à 0,4 % ;
- éventuellement Mg : ≤ 0,2 %, de préférence ≤ 0,1 % de préférence < 0,05 % ;
- autres éléments d'alliage < 0,1 % individuellement, et au total < 0,5 % ;
- impuretés : < 0,05 % individuellement, et au total < 0,15 % ;
reste aluminium.

16. Utilisation d'une poudre selon la revendication 15, dans un procédé de fabrication choisi parmi : la pulvérisation à froid (CSC), le dépôt par fusion laser (LMD), la fabrication additive par friction (AFS), le frittage par étincelle au plasma (FAST) ou le soudage par friction rotative (IRFW), de préférence la pulvérisation à froid (CSC).

## Patentansprüche

1. Verfahren zur Herstellung eines Werkstücks (20) mit einer Bildung von aufeinanderfolgenden, übereinander liegenden Metallschichten (20₁,...,20ₙ), wobei jede Schicht durch das Aufbringen eines Zusatzmetalls (15, 25) gebildet wird, wobei das Zusatzmetall einer Energiezufuhr ausgesetzt wird, so dass es schmilzt und durch Erstarren die Schicht bildet, wobei das Verfahren **dadurch gekennzeichnet ist, dass** das Zusatzmetall (15, 25) eine Aluminiumlegierung ist, die die folgenden Legierungselemente (Gew.-%) aufweist:
- Zr: 0,5 bis 2,5 %, vorzugsweise gemäß einer ersten Variante 0,8 bis 2,5 %, weiter bevorzugt 1 bis 2,5 %, noch bevorzugter 1,3 bis 2,5 %; oder vorzugsweise gemäß einer zweiten Variante 0,5 bis 2 %, weiter bevorzugt 0,6 bis 1,8 %, weiter bevorzugt 0,6 bis 1,6 %, weiter bevorzugt 0,7 bis 1,5 %, weiter bevorzugt 0,8 bis 1,5 %, weiter bevorzugt 0,9 bis 1,5 %, noch bevorzugter 1 bis 1,4 %;
- Fe: 0 % bis 3 %, vorzugsweise 0,5 % bis 2,5 %; vorzugsweise gemäß einer ersten Variante 0,8 bis 2,5 %, bevorzugt 0,8 bis 2 %, weiter bevorzugt 0,8 bis 1,2 %; oder vorzugsweise gemäß einer zweiten Variante 1,5 bis 2,5 %, bevorzugt 1,6 bis 2,4 %, weiter bevorzugt 1,7 bis 2,3 %;
- gegebenenfalls Si: ≤ 0,3 %, bevorzugt ≤ 0,2 %, weiter bevorzugt ≤ 0,1 %;
- gegebenenfalls Cu: ≤ 0,5 %, vorzugsweise 0,05 bis 0,5 %, bevorzugt 0,1 bis 0,4 %;
- gegebenenfalls Mg: ≤ 0,2 %, vorzugsweise ≤ 0,1 %, bevorzugt < 0,05 %;
- weitere Legierungselemente jeweils < 0,1 %, und insgesamt < 0,5 %;
- Verunreinigungen: jeweils < 0,05 %, und insgesamt < 0,15 %;
Rest Aluminium.

2. Verfahren nach Anspruch 1, wobei die weiteren Elemente ausgewählt sind aus: Cr, V, Ti, Mn, Mo, W, Nb, Ta, Sc, Ni, Zn, Hf, Nd, Ce, Co, La, Ag, Li, Y, Yb, Er, Sn, In, Sb, Sr, Ba, Bi, Ca, P, B und/oder Mischmetall.

3. Verfahren nach irgendeinem der vorhergehenden Ansprüche, wobei der Massenanteil jedes weiteren Legierungselements weniger als 300 ppm oder weniger als 200 ppm oder weniger als 100 ppm beträgt.

4. Verfahren nach irgendeinem der vorhergehenden Ansprüche, wobei:
- Zr: 0,5 % bis 2,5 %;
- Fe ≥ 1 %.

5. Verfahren nach irgendeinem der Ansprüche 1 bis 3, wobei:
- Zr: 0,5 % bis 2,5 %;
- Fe: < 1 %.

6. Verfahren nach irgendeinem der vorhergehenden Ansprüche, das im Anschluss an die Bildung der Schichten (20₁...20ₙ), d. h. im Anschluss an die Bildung des fertigen Werkstücks, ein Anwenden einer Wärmebehandlung umfasst.

7. Verfahren nach Anspruch 6, bei dem die Wärmebehandlung ein Auslagern oder ein Glühen ist.

8. Verfahren nach irgendeinem der Ansprüche 6 oder 7, bei dem die Wärmebehandlung
- bei einer Temperatur über 400 °C durchgeführt wird, wobei die Dauer der Wärmebehandlung von 0,1 h bis 10 h liegt;
- oder bei einer Temperatur im Bereich von 300 °C bis 400 °C durchgeführt wird, wobei die Dauer der Wärmebehandlung von 0,5 h bis 100 h liegt.

9. Verfahren nach irgendeinem der Ansprüche 6 oder 7, bei dem die Wärmebehandlung bei einer Temperatur von 350 °C oder höher oder sogar 400°C oder einer Dauer von 90 bis 200 h durchgeführt wird, um eine optimale thermische oder elektrische Leitfähigkeit zu erhalten.

10. Verfahren nach irgendeinem der vorhergehenden Ansprüche, das kein Abschrecken im Anschluss an die Bildung der Schichten, d. h. im Anschluss an die Bildung des fertigen Werkstücks, oder im Anschluss an die Wärmebehandlung umfasst.

11. Verfahren nach irgendeinem der vorhergehenden Ansprüche, **dadurch gekennzeichnet, dass** es bei einer Temperatur von bis zu 350 °C durchgeführt wird.

12. Verfahren nach irgendeinem der vorhergehenden Ansprüche, bei dem das Zusatzmetall die Form eines Pulvers (15) annimmt, dessen Bestrahlung mit einem Lichtstrahl (12) oder einem Strahl geladener Partikel ein lokalisiertes Schmelzen und anschließendes Erstarren bewirkt, so dass eine feste Schicht (20₁...20ₙ) gebildet wird.

13. Verfahren nach irgendeinem der Ansprüche 1 bis 11, bei dem das Zusatzmetall aus einem Schweißdraht (25) stammt, dessen Erhitzung mit einer Wärmequelle (22) ein lokalisiertes Schmelzen und anschließendes Erstarren bewirkt, so dass eine feste Schicht (20₁...20ₙ) gebildet wird.

14. Metallisches Werkstück, das durch ein Verfahren nach irgendeinem der vorhergehenden Ansprüche gewonnen wird.

15. Pulver, das zur Verwendung als Zusatzwerkstoff eines additiven Fertigungsverfahrens bestimmt ist, **dadurch gekennzeichnet, dass** es aus einer Aluminiumlegierung besteht, die die folgenden Legierungselemente (Gew.-%) aufweist:
- Zr: 0,5 bis 2,5 %, vorzugsweise gemäß einer ersten Variante 0,8 bis 2,5 %, weiter bevorzugt 1 bis 2,5 %, noch bevorzugter 1,3 bis 2,5 %; oder vorzugsweise gemäß einer zweiten Variante 0,5 bis 2 %, weiter bevorzugt 0,6 bis 1,8 %, weiter bevorzugt 0,6 bis 1,6 %, weiter bevorzugt 0,7 bis 1,5 %, weiter bevorzugt 0,8 bis 1,5 %, weiter bevorzugt 0,9 bis 1,5 %, noch bevorzugter 1 bis 1,4 %;
- Fe: 0 % bis 3 %, vorzugsweise 0,5 % bis 2,5 %; vorzugsweise gemäß einer ersten Variante 0,8 bis 2,5 %, bevorzugt 0,8 bis 2 %, weiter bevorzugt 0,8 bis 1,2 %; oder vorzugsweise gemäß einer zweiten Variante 1,5 bis 2,5 %, bevorzugt 1,6 bis 2,4 %, weiter bevorzugt 1,7 bis 2,3 %;
- gegebenenfalls Si: ≤ 0,3 %, bevorzugt ≤ 0,2 %, weiter bevorzugt ≤ 0,1 %;
- gegebenenfalls Cu: ≤ 0,5 %, vorzugsweise 0,05 bis 0,5 %, bevorzugt 0,1 bis 0,4 %;
- gegebenenfalls Mg: ≤ 0,2 %, vorzugsweise ≤ 0,1 %, bevorzugt < 0,05 %;
- weitere Legierungselemente jeweils < 0,1 % und insgesamt < 0,5 %;
- Verunreinigungen: jeweils < 0,05 % und insgesamt < 0,15 %;
Rest Aluminium.

16. Verwendung eines Pulvers nach Anspruch 15 in einem Herstellungsverfahren, das ausgewählt ist aus: Kaltgasspritzen (CSC), Laserauftragschweißen (LMD), Additive Fertigung durch Reibung (AFS), Plasmafunkensintern (FAST) oder Rotationsreibschweißen (IRFW), vorzugsweise Kaltgasspritzen (CSC).

## Claims

1. A method for manufacturing a part (20) including a formation of successive metallic layers (20ᵢ...20ₙ), superimposed on one another, each layer being formed by the deposition of a filler metal (15, 25), the filler metal being subjected to an energy input so as to melt and constitute, when solidifying, said layer, the method being **characterized in that** the filler metal (15, 25) is an aluminum alloy including the following alloy elements (weight%):
- Zr: 0.5 % to 2.5 %, preferably according to a first variant 0.8 to 2.5 %, more preferably 1 to 2.5 %, still more preferably 1.3 to 2.5 % ; or preferably according to a second variant 0.5 to 2 %, more preferably 0.6 to 1.8 %, more preferably 0.6 to 1.6 %, more preferably 0.7 to 1.5 %, more preferably 0.8 to 1.5 %, more preferably 0.9 to 1.5 %, still more preferably 1 to 1.4 %;
- Fe: 0 % to 3 %, preferably 0.5 % to 2.5 °/; preferably according to a first variant 0.8 to 2.5 %, preferably 0.8 to 2 %, more preferably 0.8 to 1.2; or preferably according to a second variant 1.5 to 2.5 %, preferably 1.6 to 2.4 %, more preferably 1.7 to 2.3 °/;
- optionally Si: ≤ 0,3 %, preferably ≤ 0.2 %, more preferably ≤ 0.1 %;
- optionally Cu: ≤ 0.5 %, preferably 0.05 to 0.5 %, preferably 0.1 to 0.4 %;
- optionally Mg: ≤ 0.2 %, preferably ≤ 0.1 %, preferably < 0.05 %;
- Other alloy elements < 0.1 % individually, and < 0.5 % all in all;
- impurities: < 0.05 % individually, and < 0.15 % all in all;
the remainder consisting of aluminum.

2. The method according to claim 1, wherein the other elements are selected from: Cr, V, Ti, Mn, Mo, W, Nb, Ta, Sc, Ni, Zn, Hf, Nd, Ce, Co, La, Ag, Li, Y, Yb, Er, Sn, In, Sb, Sr, Ba, Bi, Ca, P, B and/or a mischmetal.

3. The method according to any one of the preceding claims, wherein the weight fraction of each other alloy element is lower than 300 ppm, or optionally lower than 200 ppm, or optionally lower than 100 ppm.

4. The method according to any one of the preceding claims, wherein:
- Zr: 0.5 % to 2.5 %;
- Fe ≥ 1 %.

5. The method according to any one of claims 1 to 3, wherein:
- Zr: 0.5 % to 2.5 %;
- Fe: < 1 %.

6. The method according to any one of the preceding claims, including, following the formation of the layers (20₁...20ₙ), that is to say following the formation of the final part, an application of a heat treatment.

7. The method according to claim 6, wherein the heat treatment consists of tempering or annealing.

8. The method according to any one of claims 6 or 7, wherein the heat treatment is performed:
- at a temperature higher than 400°C, in which case the duration of the heat treatment is comprised from 0.1 h to 10 h;
- or at a temperature comprised from 300°C to 400°C, in which case the duration of the heat treatment is comprised from 0.5 h to 100 h.

9. The method according to any one of claims 6 or 7, wherein the heat treatment is performed at a temperature higher than or equal to 350°C, or optionally higher than or equal to 400°C, or a duration from 90 to 200 h, so as to obtain an optimum thermal or electrical conductivity.

10. The method according to any one of the preceding claims, including no quenching following the formation of the layers, that is to say following the formation of the final part, or following the heat treatment.

11. The method according to any one of the preceding claims, **characterized in that** it is carried out at a temperature ranging up to 350°C.

12. The method according to any one of the preceding claims, wherein the filler metal is in the form of a powder (15), whose exposure to a beam of light (12) or of charged particles results in a local melting followed by a solidification, so as to form a solid layer (20₁...20ₙ).

13. The method according to any one of claims 1 to 11, wherein the filler metal is derived from a filler wire (25), whose exposure to a heat source (22) results in a local melting followed by a solidification, so as to form a solid layer (20₁...20ₙ).

14. A metallic part obtained by a method object of any one of the preceding claims.

15. A powder, intended to be used as a filler material of an additive manufacturing method, **characterized in that** it is constituted by an aluminum alloy, including the following alloy elements (weight%):
- Zr: 0.5 % to 2.5 %, preferably according to a first variant 0.8 to 2.5 %, more preferably 1 to 2.5 %, still more preferably 1.3 to 2.5 % ; or preferably according to a second variant 0.5 to 2 %, more preferably 0.6 to 1.8 %, more preferably 0.6 to 1.6 %, more preferably 0.7 to 1.5 %, more preferably 0.8 to 1.5 %, more preferably 0.9 to 1.5 %, still more preferably 1 to 1.4 %;
- Fe: 0 % to 3 %, preferably 0.5 % to 2.5 %; preferably according to a first variant 0.8 to 2.5 0%, preferably 0.8 to 2 %, more preferably 0.8 to 1.2; or preferably according to a second variant 1.5 to 2.5 %, preferably 1.6 to 2.4 %, more preferably 1.7 to 2.3 °/;
- optionally Si: ≤ 0.3 %, preferably ≤ 0.2 %, more preferably ≤ 0.1 %;
- optionally Cu: ≤ 0.5 %, preferably 0.05 to 0.5 %, preferably 0.1 to 0.4 %;
- optionally Mg: ≤ 0.2 %, preferably ≤ 0.1 %, preferably < 0.05 %;
- Other alloy elements < 0.1 % individually, and < 0.5 % all in all;
- impurities: < 0.05 % individually, and < 0.15 % all in all;
the remainder consisting of aluminum.

16. A use of a powder according to claim 15, in a manufacturing method selected amongst: cold spray consolidation (CSC), laser metal deposition (LMD), additive friction stir (AFS), spark plasma sintering (FAST) or rotary friction welding (IRFW), preferably cold spray consolidation (CSC).
